# EUROPEAN PATENT SPECIFICATION

(11) **EP 2 213 687 B1**
(45) Date of publication and mention of the grant of the patent: **14.09.2016**
(21) Application number: 10151978.3
(22) Date of filing: 28.01.2010
(51) Int. Cl.: C08C 19/20, C08C 19/22, C08C 19/25, C08L 19/00, B60C 1/00

(54) **Rubber composition and pneumatic tire**
Kautschukzusammensetzung und Luftreifen
Composition de caoutchouc et pneu

(30) Priority: 29.01.2009 US 148199 P; 18.11.2009 US 620953
(43) Date of publication of application: 04.08.2010
(73) Proprietor: The Goodyear Tire & Rubber Company, Akron, OH 44316-0001 (US)
(72) Inventor: Sandstrom, Paul Harry, Cuyahoga Falls, OH 44223 (US); Gulas, Brad Stephen, Cleveland, OH 44113 (US); Frantz, David Mark, Norton, OH 44203 (US); Cronin, Steven Wayne, Akron, OH 44313 (US)
(74) Representative: Kutsch, Bernd

(56) References cited:
- EP-A2- 1 963 110
- JP-A- 2004 067 982
- US-A1- 2004 110 906
- Schaefer Ron: "Dynamic properties of rubber." Rubber World, [Online] 1 February 1995 (1995-02-01), pages 1-4, XP002581503 ISSN: 0035-9572 Retrieved from the Internet: URL:http://www.thefreelibrary.com/_/print/ PrintArticle.aspx?id=16717938> [retrieved on 2010-05-07]

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

JP-A- 2004-067982 describes a rubber composition for a tire tread comprising a styrene-butadiene rubber prepared by anionic polymerization and modified with an alkoxysilane compound.

EP-A-1 963 110 describes a process for the preparation of a chain end modified polymer by reacting a living anionic elastomeric polymer with a silane-sulfide modifier.

The present invention is directed to a rubper composition of claim 1 and to a pneumatic tire of claim 6.

Dependent claims refer to preferred embodiments of the invention.

### Brief Description of the Drawings

FIG. - 1 shows rubber extrudates made using a tread die; and
FIG. - 2 shows rubber extrudates made using an ASTM #1 (Garvey) die.

### Description of the Invention

In a preferred embodiment of the invention, there is disclosed to a pneumatic tire having a component comprising a vulcanizable rubber composition comprising, based on 100 parts by weight of elastomer (phr),
(A) from 60 to 90 phr of a solution polymerized styrene-butadiene rubber functionalized with an alkoxysilane group and and a thiol;
(B) from 40 to 10 phr of polybutadiene having a microstructure comprised of 96 to 99 percent cis 1,4-isomeric units, 0.1 to 1 percent trans 1,4-isomeric units and from 1 to 3 percent vinyl 1,2-isomeric units; a number average molecular weight (Mn) in a range of from 75,000 to 150,000 and a heterogeneity index (Mw/Mn) in a range of from 3/1 to 5/1; and
(C) from 50 to 150 phr of silica.

In one embodiment, the styrene-butadiene rubber is obtained by copolymerizing styrene and butadiene; and characterized in that the styrene-butadiene rubber has a thiol, group and an alkoxysilyl group which are bonded to the polymer chain. In one embodiment, the alkoxysilyl group may be at least one of methoxysilyl group and ethoxysilyl group.

The thiol group may be bonded to any of a polymerization initiating terminal, a polymerization terminating terminal, a main chain of the styrene-butadiene rubber and a side chain, as long as it is bonded to the styrene-butadiene rubber chain. However, the thiol group is preferably introduced to the polymerization initialing terminal or the polymerization terminating terminal, in that the disappearance of energy at a polymer terminal is inhibited to improve hysteresis loss characteristics.

Further, the content of the alkoxysilyl group bonded to the polymer chain of the (co)polymer rubber is preferably from 0.5 to 200 mmol/kg of (styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerisation initiating terminal or the polymerization terminating terminal in that the disappearance of energy is inhibited from the (co)polymer terminal to be able to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a teminating agent compound having a thiol group protected with a protecting group and an alkoxysilyl group to react it with a living polymer chain terminal at the time when the polymerisation has substantially completed, and then conducting debloking, for example, by hydrolysis or other appropriate procedure, in one embodiment the styrene-butadiene rubber can be produced as disclosed in US-A-7,342,070. In another embodiment, the styrene-butadiene rubber can be produced as disclosed in WO 2007/047973.
or 2, and k is an integer of 1 or 2, with the proviso that n+m+k is an integer of 3 or 4, 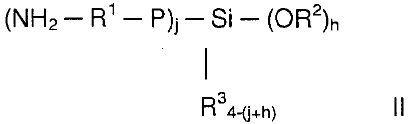 wherein P, R¹, R² and R³ have the same definitions as give for the above-mentioned formula I, j is an integer of 1 to 3, and h is an integer of 1 to 3, with the provision that j+h is an integer of 2 to 4.

The terminating agent compound having a protected primary amino group and an alkoxysilyl group may be any of various compounds as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III

In one enmbodiment, the rubber compositin includes from 60 to 80 phr of styrene-butadiene rubber functionalized with an alkoxysilane group and a thiol group.

In one embodiment, the solution polymerized styren-butadiene rubber is as disclosed in WO-A-2007/047943 and is functionalized with an alkoxysilane group and a thiol, and comprises the reaction product of a living anionic polymer and a silane sulfide modifier represented by the formula VII

(R⁴O)₂R⁴_{y}Si-R⁹-S-SiR⁴₃ VII

wherein Si is silicon; S is sulfur; O is oxygen; x is an integer selected from 1, 2 and 3;y is an integer selected from 0, 1, and 2; x+y=3;R⁴ is the same or different and is (C₁-C₁₆) alkyl; and R' is aryl, and alkyl aryl, or (C₁-C₁₆) alkyl. In one embodiment, R ¹⁶ is a (C₁-C₁₆) alkyl. In one embodiment, each R⁴ group is the same or different, and each is independently a C₁-C₅ alkyl, and R⁵ is C₁-C₅ alkyl.

Suitable styrene-butadiene rubbers functionalized with an alkoxysilane group and a thiol group are available commercially, such as a developmental functionalized SBR from Dow Olefinverbund GmbH which is of the type of silane/thiol functionalized SBR described in WO-A- 2007/047943.

Another component of the rubber composition is a specialized cis 1,4-polybutadiene elastomer having a microstructure comprised of 96 to 99 percent cis 1,4-isomeric units, 0.1 to 1 percent trans 1,4-isomeric units and from 1 to 3 percent vinyl 1,2-isomeric units; a number average molecular weight (Mn) in a range of from 75,000 to 150,000 (relatively low Mn for a cis 1,4-polybutadiene elastomer) and a heterogeneity index (Mw/Mn) in a range of from 3/1 to 5/1 (a relatively high heterogeneity index range illustrating a significant disparity between its weight average and number average molecular weights).

The specialized cis 1,4-polybutadiene elastomer may be prepared, for example, by organic solvent solution polymerization of 1,3-butadiene monomer in the presence of a catalyst comprising an organonickel or organocobalt compound, an organoaluminum compound, a fluorine-containing compound, and a para styrenated diphenylamine which is exemplified in US-A- 5,451,646. Such catalyst components comprise nickel octoate, triisobutylaluminum, hydrogen fluoride and para styrenated diphenylamine.

The relatively broad heterogeneity index (Mw/Mn ratio range of 3/1 to 5/1) of the specialized cis 1,4-polybutadiene elastomer is considered herein to be significant to promote improved processing of the unvulcanized rubber composition of which a major, rather than a minor, fraction of its rubber component is the specialized cis 1,4-polybutadiene rubber, in a sense of promoting a relatively smooth surfaced extrudate, as compared to similar and more typical cis 1,4-polybutadiene elastomers rubber having the aforesaid significantly higher molecular weight and significantly lower heterogeneity index in a range of from 1.5/1 to 2.5/1. The specialized cis 1,4-polybutadiene elastomer is also considered herein to be unique in that it is configured with a level, or degree, of branching.

In one embodiment, the rubber composition includes from 40 to 10 phr of the specialized polybutadiene rubber. Suitable specialized polybutadiene rubber is available commercially, such as Budene® 4001 from Goodyear.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials, and such terms are well known to those having skill in the rubber mixing or rubber compounding art.

The vulcanizable rubber composition may include from 50 to 150 phr of silica.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

Various commercially available silicas may be used, such as, silicas commercially available from PPG Industries under the Hi-Sil trademark with designations 210 and 243; silicas available from Rhodia, with designations of Z1165MP and Z165GR; and silicas available from Degussa AG with, designations VN2 and VN3.

The vulcanizable rubber composition may include from 5 to 50 phr of carbon black.

Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

The vulcanizable rubber composition may include both silica and carbon black in a combined concentration of from 20 to a100 phr, in any weight ratio of silica to carbon black. In one embodiment, the vulcanizable rubber composition includes both silica and carbon black in approximately the same weight amounts, i.e., a weight ratio of 1.

Other fillers may be used in the rubber composition including, but not limited to, particulate fillers including ultra high molecular weight polyethylene (UHMWPE), particulate polymer gels such as those disclosed in US-A- 6,242,534; US-A- 6,207,757; US-A- 6,133,364; US-A- 6,372,857; US-A- 5,395,891; or US-A-6,127,488, and plasticized starch composite filler such as that disclosed in US-A-5,672,639.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z VIII

in which Z is selected from the group consisting of 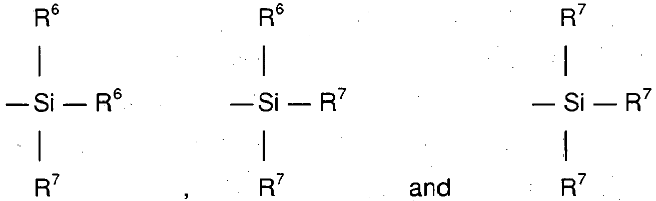 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula VIII, preferably Z is 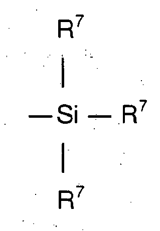 where R⁷ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH2)₆C(=O)-S-CH₂CH₂CH₂Si(OCH₂CH₃)₃, which is available commercially as NXT™ from Momentive Performance Materials.

In another embodiment, suitable sulfur containing organosilicon compounds include compounds disclosed in US-A- 2006/0041063. In one embodiment, the sulfur containing organosilicon compounds include the reaction product of hydrocarbon based diol (e.g., 2-methyl-1,3-propanediol) with S-[3-(triethoxysilyl)propyl] thiooctanoate. In one embodiment, the sulfur containing organosilicon compound is NXT-Z™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound of formula I in a rubber composition will vary depending on the level of other additives that are used. Generally speaking, the amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Such processing aids can include, for example, aromatic, naphthenic, paraffinic, and low PCA (polycyclic aromatic) oils such as MES, TDAE, heavy naphthenic, and SRAE processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. Preferably, the compound is a tread.

The pneumatic tire of the present invention may be a race tire, passenger tire, aircraft tire, agricultural, earthmover, off-the-road or truck tire. Preferably, the tire is a passenger or truck tire. The tire may also be a radial or bias, with a radial being preferred.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

In this comparative example, the effect of combining a styrene-butadiene rubber functionalized with alkoxysilane and primary amine groups with a specialized polybutadiene is illustrated.

The elastomers were compounded in a three-step mix procedure with standard amounts of conventional curatives and proosssing aids as indicated in Table 1, and cured with a standard cure cycle. Cured samples were evaluated for various physical properties following standard tests protocols as indicated in Table 2.

The samples were also tested for extrudability following ASTM D2230 using a tread die and an ASTM #1 die. Comparison of extrudates is shown in FIG. - 1 (tread die) and FIG. - 2 (ASTM #1 die).

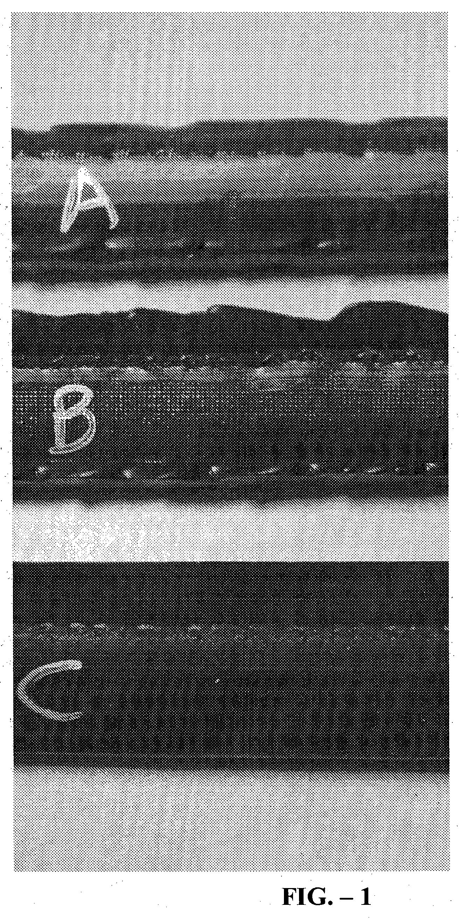

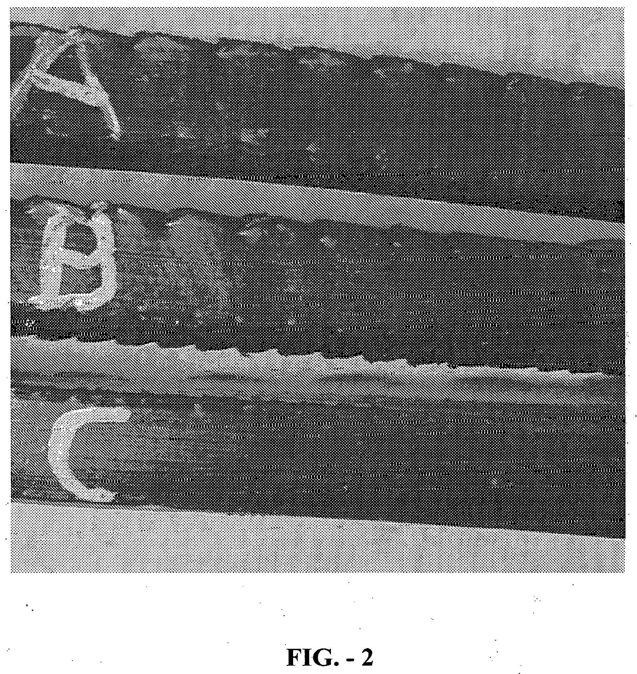

As can be seen from Table 2. Sample B containing the functionalized SBR shows significantly poorer processability compared to control Sample A as indicated by the higher uncured G'. By contrast addition of the specialized polybutadiene with the functionalized SBR in Sample C leads to improved processability as compared to Sample B as indicated by the improved uncured G'. The improved processability of Sample C is further illustrated in FIGS. 1 and 2, where extrudate profiles show a much smoother extrusion for Sample C as compared to Samples A and B.

Improvement in wear resistance due to the functionalized SBR is also seen comparing Sample B to control Sample A. This improved wear is maintained in Sample C, where the improved processability as compared with Sample B demonstrates the advantage of combining the functionailzed SBR with the specialized polybutadiene.

Improvement in tear resistance due to the functionalized SBR is also seen comparing Sample B 10 control Sample A. This improved tear is maintained in Sample C, where the improved processability as compared with Sample B demonstrates the advantage of combining the functionalized SBR with the specialized polybuladiene.

**Table 1**

| **Sample No.** | **A** | **B** | **C** |
|---|---|---|---|
| **First Non Productive Step** | | | |
| SBR¹ | 70 | 0 | 0 |
| SBR-functionalized² | 0 | 70 | 70 |
| Polybutadiene³ | 30 | 30 | 0 |
| Polybutadiene-specialized⁴ | 0 | 0 | 30 |
| Silica | 37.3 | 37.3 | 37.3 |
| Process Oil | 11 | 11 | 11 |
| Tall oil fatty acid | 2 | 2 | 2 |
| Zinc Oxide | 3.5 | 3.5 | 3.5 |
| Silane Disulfide⁵ | 3.01 | 3.01 | 3.01 |

| **Second Non Productive Step** | | | |
|---|---|---|---|
| Carbon Black | 5.25 | 5.25 | 5.25 |
| Waxes^{b} | 1.5 | 1.5 | 1.5 |
| Antidegradant⁷ | 2 | 2 | 2 |
| Process Oil | 9 | 9 | 9 |
| Silica | 27.7 | 27.7 | 27.7 |
| Silane Disulfide⁵ | 2.24 | 2.24 | 2.24 |

| **Productive Step** | | | |
|---|---|---|---|
| Antidegradant⁷ | 0.75 | 0.75 | 0.75 |
| Sulfur | 1.6 | 1.6 | 1.6 |
| Accelerators⁸ | 3.1 | 3.1 | 3.1 |

| | | | |
|---|---|---|---|
| *¹ Solution polymerized styrene-butadiene rubber, 25% styrene, 60%vinyl, 40 Mooney and Tg = -26°C.* *² Solution polymerized styrene-butadiene rubber functionalized with alkoxysilyl groups and primary amine groups, with 27% by weight styrene, 57% by weight vinyl, 46 Mooney, and Tg* = - *27°C*, *as HPR® 355 from Japan Synthetic Rubber.* *³ Cis 1,4-polybutadiene rubber obtained as Budene® 1207 from The Goodyear Tire* & *rubber Company having a cis 1,4-content of at least 96 percent and a Tg of -100°C.* *⁴ Cis 1,4-polybutadiene elastomer as Budene® 4001 from The Goodyear Tire* & *Rubber Company having a Tg of -104 °C, Mooney (ML 1+4) viscosity of about 45, an Mn of 127,000, an Mw of 445,000, a broad heterogeneity index (HI) of about 3.5 and a cis 1,4-isomeric content of 98 percent obtained by organic solvent polymerization of 1,3-butadiene monomer as described in the aforesaid* US-A-5,451,646*.* *⁵ bis(triethoxysilylpropyl) disulfide* *⁶ paraffinic and microcrystalline types* *⁷p-phenylenediamine and quinoline type* *⁸ sulfenamide and guanidine type* | | | |

**Table 2**

| **Sample** | **A** | **B** | **C** |
|---|---|---|---|
| SBR | 70 | 0 | 0 |
| SBR-functionalized | 0 | 70 | 70 |
| Polybutadiene | 30 | 30 | 0 |
| Polybutadiene-specialized | 0 | 0 | 30 |
| RPA¹ 0.83 Hz, 100ºC, 15% strain RPA G', uncured, kPa | 249 | 280 | 268 |
| RPA¹ 11 Hz, 100ºC RPA, cured tan delta | 0.114 | 0.114 | 0.113 |
| Rebound 0ºC | 26 | 24 | 24 |
| Rebound 100ºC | 64 | 63 | 63 |
| Modulus² @ 300%, MPa | 8.4 | 8.6 | 8.3 |
| Tear Strength, N | 63 | 75 | 75 |
| DIN Abrasion³ (Vol. Loss), mm³ | 103 | 93 | 91 |

| | | | |
|---|---|---|---|
| *¹ Data according to Rubber Process Analyzer as RPA 2000. TM. instrument by Alpha Technologies, formerly the Flexsys Company and formerly the Monsanto Company. References to an RPA-2000 instrument may be found in the following publications:* H. A. Palowski, et al, Rubber World, June 1992 and January 1997, as well as Rubber & Plastics News, April 26 and May 10, 1993. ² Data according to Automated Testing System Instrument by the Instron Corporation. Such instrument may determine ultimate tensile, ultimate elongation,modul, etc. Data reported in the Table is generated by running the ring tensile test station which is an instron 4201 load frame ³Data according to DIN 53516 abrasion resistance test procedure using a Zwick drum abrasion unit, model 6102 with 2.5 Newtons force. DIn standards are German test standards. The DIN abrasion results are reportes as relative values to a control rubber composition used by the laboratory. | | | |

### Comparative Example II

In this comparative example, the effect of varying the ratio of functionalized styrene-butadiene rubber to specialized polybutadiene rubber is illustrated. Rubber samples were produced following the procedures of Example I, with elastomer amounts as shown in Table 3, and amounts of all other additives the same as in Example I with the exception that 70 phr of sillca was used. The samples were tested for physical properties as described in Comparative Example I, with results also shown in Table 3,

**Table 3**

| **Sample** | **D** | **E** | **F** | **G** | **H** |
|---|---|---|---|---|---|
| SBR-functionalized, phr | 90 | 80 | 70 | 60 | 50 |
| polybutadiene-specialized, phr | 10 | 20 | 30 | 40 | 50 |
| Silica, phr | 70 | 70 | 70 | 70 | 70 |
| RPA¹ 0.83 Hz 100°C, 15% strain RPA G', uncured, kPa | 304 | 274 | 272 | 255 | 242 |
| RPA¹ 11 Hz, 100°C RPA, cured tan delta | 0.107 | 0.109 | 0.120 | 0.128 | 0.131 |
| Rebound 0°C | 13 | 19 | 24 | 28 | 32 |
| Rebound 100°C | 64 | 63 | - | - | - |
| Modulus² @ 300%, MPa | 9.4 | 8.7 | 8.4 | 7.9 | 7.5 |
| Tear Strength, N | 66 | 69 | 79 | 88 | 104 |
| DIN Abrasion³ (Vol. Loss), mm³ | 91 | 109 | 99 | 95 | 76 |

| | | | | | |
|---|---|---|---|---|---|
| *¹ Data according to Rubber Process Analyser as RPA 2000 TM instrument by Alpha Technologies, formerly the Flexsys Company and formerly the Mmonsanto Company. References to an RPA-2000 instrument may be found in the following publications:* H. A. Palowski, et al, Rubber World, June 1992 and January 1997*, as well as* Rubber & Plastics News, April 25 and May 10, 1993*.* *² Data according to Automated Testing System Instrument by the Inetron Corporation. Such instrument may determine ultimate tensile, ultimate elongation, modul, etc. Data reported in the Table is generated by running the ring tensile test station which is an Inetron 4201 load frame* | | | | | |

### Comparative Example III

In this oomparative example, the effect of varying the amount of silica in a rubber compound containing 70 phr of functionalized styrene-butadiene rubber and 30 phr of specialized polybutadiene rubber is illustrated. Rubber samples were produced following the procedures of Comparative Example I, with silica amounts as shown in Table 4, and amounts of all other additives the same as in Comparative Example I. The samples were tested for physical properties as described in Comparative Example I, with results also shown in Table 4.

**Table 4**

| **Sample** | **I** | **J** | **K** | **L** | **M** | **N** |
|---|---|---|---|---|---|---|
| SBR-functionalized, phr | 70 | 70 | 70 | 70 | 70 | 70 |
| Polybutadiene-specialized, phr | 30 | 30 | 30 | 30 | 30 | 30 |
| Silica, phr | 90 | 75 | 70 | 65 | 55 | 40 |
| RPA¹ 0.83 Hz, 100°C, 15% strain RPA G', uncured, kPa | 418 | 344 | 272 | 276 | 233 | 188 |

| | | | | | | |
|---|---|---|---|---|---|---|
| ¹Data according to Rubber Process Analyzer as RPa 2000, TM, instrument by Alpha technologies, formely the Flexsis Company and formely the Monsanto Company. References to an RPA-2000 Instrument may be found in the following publications: H.A Palowski, et al, Rubber World, June 1992 and January 1997, as well as Rubber & Plastics News, April 26 and May 10, 1993. | | | | | | |

## Claims

1. A rubber composition comprising, based on 100 parts by weight of elastomer (phr),
(A) from 60 to 90 phr of a solution polymerized styrene-butadiene rubber functionalized with an alkoxysilane group and a thiol;
(B) from 40 to 10 phr of polybutadiene having a microstructure comprising 96 to 99 percent cis 1,4-isomeric units, 0.1 to 1 percent trans 1,4-isomeric units and from 1 to 3 percent vinyl 1,2-isomeric units; a number average molecular weight (Mn) in a range of from 75,000 to 150,000 and a heterogeneity index (Mw/Mn) in a range of from 3/1 to 5/1; and
(C) from 50 to 150 phr of silica.

2. The rubber composition of at least one of the previous claims wherein the solution polymerized styrene-butadiene rubber is functionalized with an alkoxysilane group and a thiol, and comprises the reaction product of a living anionic polymer and a silane-sulfide modifier represented by the formula
(R⁴O)ₓR⁴_{y}Si-R⁵-S-SiR⁴₃
wherein Si is silicon; S is sulfur; O is oxygen; x is an integer selected from 1, 2 and 3;y is an integer selected from 0, 1, and 2; x+y=3; R⁴ is the same or different and is (C₁-Cₗ₆) alkyl; and R' is, aryl, and alkyl aryl, or (C₁-C₁₆) alkyl.

3. The rubber composition of claim 2 wherein R⁵ is a (C₁-C₁₆) alkyl.

4. The rubber composition of claim 2 wherein each R⁴ group is the same or different, and each is independently a C₁-C₅ alkyl, and R⁵ is C₁-C₅ alkyl.

5. The rubber composition of at least one of the previous claims comprising 50 to 100 phr of silica.

6. A pneumatic tire having a component, the component comprising a vulcanizable rubber composition, wherein the rubber composition is the rubber composition according to at least one of the previous claims.

7. The pneumatic tire of claim 6, wherein the component is selected from the group consisting of tread cap, tread base, sidewall, apex, chafer, sidewall insert, wirecoat and innerliner.

8. The pneumatic tire of claim 6, wherein the component is a tread cap or a tread base.

9. The pneumatic tire of claim 6, wherein the vulcanizable rubber composition further comprises from 5 to 50 phr of carbon black.

10. The pneumatic tire of claim 6 or 9, wherein the vulcanizable rubber composition comprises silica and carbon black in a combined concentration of from 20 to 100 phr.

11. The pneumatic tire of claim 10, wherein the vulcanizable rubber composition comprises silica and carbon black in a combined concentration of from 20 to 100 phr and in a weight ratio in a range of from 0.7 to 1.3 or from 0.9 to 1.1 such as 1.

## Patentansprüche

1. Kautschukzusammensetzung, umfassend, auf Basis von 100 Gewichtsteilen Elastomer (phr),
(A) 60 bis 90 phr eines lösungspolymerisierten Styrol-Butadien-Kautschuks, funktionalisiert mit einer Alkoxysilangruppe und einem Thiol;
(B) 40 bis 10 phr Polybutadien mit einer Mikrostruktur, umfassend 96 bis 99 Prozent cis-1,4-Isomereinheiten, 0,1 bis 1 Prozent trans-1,4-Isomereinheiten und 1 bis 3 Prozent Vinyl-1,2-Isomereinheiten; einer zahlenmittleren Molmasse (Mn) im Bereich von 75.000 bis 150.000 und einem Heterogenitätsindex (Mw/Mn) im Bereich von 3:1 bis 5:1; und
(C) 50 bis 150 phr Silika.

2. Kautschukzusammensetzung nach mindestens einem der vorhergehenden Ansprüche, wobei der lösungspolymerisierte Styrol-Butadien-Kautschuk mit einer Alkoxysilangruppe und einem Thiol funktionalisiert ist und das Reaktionsprodukt eines lebenden anionischen Polymers und eines Silan-Sulfid-Modifizierungsmittels umfasst, dargestellt durch die Formel
(R⁴O)ₓR⁴_{y}Si-R⁵-S-SiR⁴₃,
wobei Si Silizium ist, S Schwefel ist; O Sauerstoff ist; x eine ganze Zahl ist, ausgewählt aus 1, 2 und 3; y eine ganze Zahl ist, ausgewählt aus 0, 1 und 2; x+y=3; R⁴ gleich oder verschieden ist und (C₁-C₁₆)-Alkyl ist; und R⁵ Aryl, und Alkylaryl, oder (C₁-C₁₆)-Alkyl ist.

3. Kautschukzusammensetzung nach Anspruch 2, wobei R⁵ ein (C₁-C₁₆)-Alkyl ist.

4. Kautschukzusammensetzung nach Anspruch 2, wobei jede R⁴-Gruppe gleich oder verschieden ist und jeweils unabhängig ein C₁-C₅-Alkyl ist, und R⁵ C₁-C₅-Alkyl ist.

5. Kautschukzusammensetzung nach mindestens einem der vorhergehenden Ansprüche, umfassend 50 bis 100 phr Silika.

6. Luftreifen mit einem Bauteil, wobei das Bauteil eine vulkanisierbare Kautschukzusammensetzung umfasst, wobei die Kautschukzusammensetzung die Kautschukzusammensetzung nach mindestens einem der vorhergehenden Ansprüche ist.

7. Luftreifen nach Anspruch 6, wobei das Bauteil aus der Gruppe ausgewählt ist, bestehend aus Laufstreifenoberteil, Laufstreifenunterteil, Seitenwand, Kernprofil, Wulstschutzstreifen, Seitenwandeinsatz, Drahtüberzug und Innenisolierung.

8. Luftreifen nach Anspruch 6, wobei das Bauteil ein Laufstreifenoberteil oder ein Laufstreifenunterteil ist.

9. Luftreifen nach Anspruch 6, wobei die vulkanisierbare Kautschukzusammensetzung weiter 5 bis 50 phr Carbon Black umfasst.

10. Luftreifen nach Anspruch 6 oder 9, wobei die vulkanisierbare Kautschukzusammensetzung Silika und Carbon Black in einer kombinierten Konzentration von 20 bis 100 phr umfasst.

11. Luftreifen nach Anspruch 10, wobei die vulkanisierbare Kautschukzusammensetzung Silika und Carbon Black in einer kombinierten Konzentration von 20 bis 100 phr und in einem Gewichtsverhältnis im Bereich von 0,7 bis 1,3 oder von 0,9 bis 1,1, wie etwa 1, umfasst.

## Revendications

1. Composition de caoutchouc comprenant, basées sur 100 parties en poids d'élastomère (phr) :
(A) de 60 à 90 phr d'un caoutchouc de styrène-butadiène polymérisé en solution, fonctionnalisé avec un groupe alcoxysilane et un thiol ;
(B) de 40 à 10 phr d'un polybutadiène possédant une microstructure comprenant de 96 à 99 % d'unités isomères 1,4 cis, de 0,1 à 1 % d'unités isomères 1,4 trans et de 1 à 3 % d'unités isomères possédant un groupe vinyle en position 1,2; un poids moléculaire moyen en nombre (Mn) dans la plage de 75.000 à 150.000 et un indice d'hétérogénéité (Mw/Mn) dans la plage de 3/1 à 5/1 ; et
(C) de 50 à 150 phr de silice.

2. Composition de caoutchouc selon au moins une des revendications précédentes, dans laquelle le caoutchouc de styrène butadiène polymérisé en solution est fonctionnalisé avec un groupe alcoxysilane et un thiol, et comprend le produit réactionnel d'un polymère anionique vivant et d'un modificateur à base de sulfure de silane répondant à la formule
(R⁴O)ₓR⁴_{y}Si-R⁵-S-SiR⁴₃
dans laquelle Si représente un atome de silicium ; S représente un atome de soufre ; O représente un atome d'oxygène ; x représente un entier choisi parmi 1, 2 et 3 ; y représente un entier choisi parmi 0, 1 et 2 ; x+y= 3 ; R⁴ sont identiques ou différents et représentent un groupe alkyle en C₁-C₁₆: et R⁵ représente un groupe aryle et un groupe alkylaryle ou un groupe alkyle en C₁-C₁₆.

3. Composition de caoutchouc selon la revendication 2, dans laquelle R⁵ représente un groupe en C₁-C₁₆.

4. Composition de caoutchouc selon la revendication 2, dans laquelle chacun des groupes est identique ou différent et chacun représente de manière indépendante un groupe alkyle en C₁-C₅ ; et R⁵ représente un groupe alkyle en C₁-C₅.

5. Composition de caoutchouc selon au moins une des revendications précédentes, comprenant de 50 à 100 phr de silice.

6. Bandage pneumatique possédant un composant, le composant comprenant une composition de caoutchouc vulcanisable, la composition de caoutchouc représentant la composition de caoutchouc selon au moins une des revendications précédentes.

7. Bandage pneumatique selon la revendication 6, dans lequel le composant est choisi parmi le groupe constitué par une chape de bande de roulement, une base faisant office de protection pour la bande de roulement, un flanc, un bourrage sur tringle, une bandelette talon, un insert pour flanc, un revêtement de fil métallique et un calandrage intérieur.

8. Bandage pneumatique selon la revendication 6, dans lequel le composant est une chape de bande de roulement ou une base faisant office de protection pour la bande de roulement.

9. Bandage pneumatique selon la revendication 6, dans lequel la composition de caoutchouc vulcanisable comprend en outre de 5 à 50 phr de noir de carbone.

10. Bandage pneumatique selon la revendication 6 ou 9, dans lequel la composition de caoutchouc vulcanisable comprend de la silice et du noir de carbone en une concentration combinée de 20 à 100 phr.

11. Bandage pneumatique selon la revendication 10, dans lequel la composition de caoutchouc vulcanisable comprend de la silice et du noir de carbone en une concentration combinée de 20 à 100 phr dans un rapport pondéral qui se situe dans la plage de 0,7 à 1,3 ou de 0,9 à 1,1, tel qu'un rapport pondéral égal à 1.
